# EUROPEAN PATENT APPLICATION

(11) **EP 4 851 834 A1**
(43) Date of publication of application: **09.12.2026**
(21) Application number: 26181346.3
(22) Date of filing: 27.05.2026
(51) Int. Cl.: G06F 21/32, H04L 9/32, H04L 9/40

(54) **USER AUTHENTICATION METHOD, USER AUTHENTICATION DEVICE, USER AUTHENTICATION REQUEST DEVICE, AND USER AUTHENTICATION SYSTEM**

(30) Priority: 02.06.2025 KR 20250072399; 20.11.2025 KR 20250176814
(71) Applicant: Ghost Pass Inc., Gwangju 61226 (KR)
(72) Inventor: LEE, Seon Gwan, 61641 Gwangju (KR)
(74) Representative: Zacco Sweden AB

(57) **Abstract**

A user authentication method, a user authentication device, a user authentication request device, and a user authentication system are provided. The user authentication system includes a user authentication device and a user authentication request device. The user authentication device is configured to receive an identification signal according to entry of the user authentication device into an identification signal area set for the user authentication request device, transmit personal information prestored in the user authentication device to the user authentication request device, based on receiving the identification signal, obtain first authentication means biometric data collected by the user authentication request device, generate a first authentication result value by comparing the first authentication means biometric data with prestored registered biometric data, and perform a preset function, based on the first authentication result value and the personal information.

## Description

### BACKGROUND

### 1. Field

The disclosure relates to a user authentication method, a user authentication device, a user authentication request device, and a user authentication system.

### 2. Description of the Related Art

Recently, with the advancement of smart device technologies, including smartphones, and the development of network technologies, it has become common in everyday life to collect biometric information through devices, such as smart devices or kiosks, and perform user authentication, based on the biometric information to make payments for products or obtain access authorization.

Because user authentication is a fundamental procedure for preventing identity theft, security may be regarded as the most important factor in user authentication technology.

Therefore, there is a continuing need for the development of user authentication technologies capable of providing convenience of authentication to users while maintaining a high level of security.

The aforementioned background technology is technical information possessed by the inventors for the derivation of the disclosure or obtained by the inventors during the derivation of the disclosure, and is not necessarily known technology disclosed to the general public prior to the filing of the disclosure.

### SUMMARY

The disclosure provides a user authentication method, a user authentication device, a user authentication request device, and a user authentication system. The problems to be solved by the disclosure are not limited to those described above, and other problems and advantages of the disclosure that are not described herein will be understood from the following description and will be more clearly understood from embodiments of the disclosure. Furthermore, it will be appreciated that the problems to be solved by the disclosure and the advantages of the disclosure may be realized by the means indicated in the claims and combinations thereof.

A first aspect of the disclosure provides a user authentication method performed by a user authentication device, the user authentication method including receiving an identification signal according to entry of the user authentication device into an identification signal area set for a user authentication request device, transmitting personal information prestored in the user authentication device to the user authentication request device, based on receiving the identification signal, obtaining first authentication means biometric data collected by the user authentication request device, generating a first authentication result value by comparing the first authentication means biometric data with prestored registered biometric data, and performing a preset function, based on the first authentication result value and the personal information.

A second aspect of the disclosure provides a user authentication device including a memory storing at least one program and at least one processor configured to be operated by executing the at least one program, wherein the at least one processor is further configured to receive an identification signal according to entry of the user authentication device into an identification signal area set for a user authentication request device, transmit personal information prestored in the user authentication device to the user authentication request device, based on receiving the identification signal, obtain first authentication means biometric data collected by the user authentication request device, generate a first authentication result value by comparing the first authentication means biometric data with prestored registered biometric data, and perform a preset function, based on the first authentication result value and the personal information.

A third aspect of the disclosure provides a computer-readable recording medium having recorded thereon a program for causing a computer to perform the method according to the first aspect of the disclosure.

A fourth aspect of the disclosure provides a user authentication method performed by a user authentication request device, the user authentication method including broadcasting an identification signal to an identification signal area, receiving personal information of a user from a user authentication device having received the identification signal, collecting and transmitting first authentication means biometric data of the user, based on receiving the personal information of the user, obtaining a first authentication result value from the user authentication device, and performing a preset function, based on the first authentication result value and the personal information.

A fifth aspect of the disclosure provides a user authentication request device including a memory storing at least one program and at least one processor configured to be operated by executing the at least one program, wherein the at least one processor is further configured to broadcast an identification signal to an identification signal area, receive personal information of a user from a user authentication device having received the identification signal, collect and transmit first authentication means biometric data of the user, based on receiving the personal information of the user, obtain a first authentication result value from the user authentication device, and perform a preset function, based on the first authentication result value and the personal information.

A sixth aspect of the disclosure provides a computer-readable recording medium having recorded thereon a program for causing a computer to perform the method according to the fourth aspect of the disclosure.

A seventh aspect of the disclosure provides a user authentication system including a user authentication device configured to receive an identification signal according to entry of the user authentication device into an identification signal area set for a user authentication request device, transmit personal information prestored in the user authentication device to the user authentication request device, based on receiving the identification signal, obtain first authentication means biometric data collected by the user authentication request device, generate a first authentication result value by comparing the first authentication means biometric data with prestored registered biometric data, and perform a preset function, based on the first authentication result value and the personal information, and a user authentication request device configured to broadcast the identification signal to the identification signal area, receive the personal information of the user from the user authentication device having received the identification signal, collect and transmit the first authentication means biometric data of the user, based on receiving the personal information of the user, obtain the first authentication result value from the user authentication device, and perform a preset function, based on the first authentication result value and the personal information.

In addition, other methods and other systems for implementing the disclosure and computer-readable recording media storing a computer program for performing the methods may be further provided.

Other aspects, features, and advantages of the disclosure will become better understood through the accompanying drawings, the appended claims, and the detailed description.

### BRIEF DESCRIPTION OF THE DRAWINGS

The above and other aspects, features, and advantages of certain embodiments of the disclosure will be more apparent from the following description taken in conjunction with the accompanying drawings in which:
FIG. 1 is a schematic diagram of a user authentication system according to an embodiment;
FIG. 2 is a conceptual diagram illustrating an example in which a user performs user authentication in a user authentication system according to an embodiment;
FIG. 3 is a flowchart of a method of performing user authentication through a user authentication device authentication method and performing a preset function, according to an embodiment;
FIG. 4 is a flowchart of a method, performed by a user authentication device, of transmitting personal information to a user authentication request device, according to an embodiment;
FIG. 5 is a flowchart of a method of performing user authentication through a user authentication device authentication method, according to an embodiment;
FIG. 6 is a flowchart of a method of re-performing user authentication through a user authentication device authentication method, based on obtaining a user's request to perform a preset function, according to an embodiment;
FIG. 7 is a flowchart of a method of obtaining authority information for a user from a server and performing a preset function, according to an embodiment;
FIG. 8 is a flowchart of a method of obtaining authority information for a user from a server and performing a preset function, according to another embodiment;
FIG. 9 is a flowchart of a method of performing user authentication through a user authentication request device authentication method and performing a preset function, according to an embodiment;
FIG. 10 is a flowchart of a method, performed by a user authentication device, of transmitting personal information and registered biometric data to a user authentication request device, according to an embodiment;
FIG. 11 is a flowchart of a method of, upon obtaining a user's request to perform a preset function, re-performing user authentication through a user authentication request device authentication method, according to an embodiment;
FIG. 12 is a flowchart of a method of obtaining authority information for a user from a server and performing a preset function, according to an embodiment;
FIG. 13 is an example diagram illustrating an interface for displaying personal information of at least one user located in an identification signal area of a user authentication request device, according to an embodiment;
FIG. 14 is an example diagram illustrating an interface for displaying personal information of a user corresponding to authentication means biometric data collected by a user authentication request device, according to an embodiment; and
FIG. 15 is a block diagram of a device according to an embodiment.

### DETAILED DESCRIPTION

The advantages and features of the disclosure, and methods of achieving them will be clarified with reference to embodiments described below in detail with reference to the accompanying drawings. However, the disclosure is not limited to the embodiments presented below and may be implemented in various different forms. Rather, it will be understood that the disclosure includes all modifications, equivalents, and substitutes falling within the concept and technical scope of the disclosure. The embodiments presented below are provided so that the disclosure will be thorough and complete and will fully convey the concept of the disclosure to those of ordinary skill in the art. In describing the disclosure, when the detailed description of the relevant known technology is determined to obscure the gist of the disclosure, the detailed description thereof may be omitted.

The terms as used herein are only used to describe particular embodiments and are not intended to limit the disclosure. The singular forms as used herein are intended to include the plural forms as well unless the context clearly indicates otherwise. The terms "comprise," "include," or "have" as used herein are inclusive and therefore specify the presence of one or more stated features, integers, steps, operations, elements, components, or any combination thereof, but do not preclude the presence or addition of one or more other features, integers, steps, operations, elements, components, or any combination thereof.

Some embodiments of the disclosure may be represented by functional block configurations and various processing steps. Some or all of such functional blocks may be implemented in any number of hardware and/or software configurations which perform specific functions. For example, the functional blocks of the disclosure may be implemented by one or more microprocessors or may be implemented by circuitry configurations for certain functions. In addition, for example, the functional blocks of the disclosure may be implemented in various programming or scripting languages. The functional blocks may be implemented as algorithms to be executed by one or more processors. In addition, the disclosure may employ conventional technologies for electronic environment setting, signal processing, and/or data processing. The terms such as "mechanism," "element," "means," and "configuration" may be used broadly and are not limited to mechanical and physical configurations.

In addition, connecting lines or connecting members illustrated in the drawings are intended to represent functional connections and/or physical or circuit connections. In an actual device, connecting lines or connecting members illustrated in the drawings may represent connections between components by means of a variety of functional, physical, or circuit connections which may be substituted or added.

The term "user authentication system" as used herein may refer to a system which may be provided for compliance with security of a specific procedure allowing access only to an authorized user. In the disclosure, a user may use or access a user authentication system through a user authentication device. In order to enable the user to use or access the user authentication system of the disclosure, a user authentication solution such as a user authentication application may be provided to the user, and the provided user authentication solution may be installed on the user authentication device.

The term "biometric data" as used herein may refer to data related to the body of the user or data related to products generated by the user using the user's own body, which may be used to identify the user. In the disclosure, the biometric data may be any type of biometric data. For example, the biometric data may be any one of various types of biometric data among a user's fingerprint, pupil, iris, retina, face, voice, vein, deoxyribonucleic acid (DNA), signature, handwriting, blinking pattern, skeletal structure, ear shape, palm pattern, body temperature pattern, gait pattern, heart rate pattern, electrocardiogram pattern, lip shape and movement, tongue shape and movement, brainwave pattern, finger joint shape, skin pattern and texture, kinetic signature, neural network pattern, muscle pattern, blood flow pattern, tear composition, respiration pattern, and facial blood flow pattern, or may be any combination of two or more types of biometric data.

The term "authentication means biometric data" as used herein may refer to biometric data serving as a user authentication means, and may refer to biometric data collected for user authentication. That is, the authentication means biometric data may be biometric data, of which the input or collection is permitted for user authentication by the user attempting user authentication, and may be used to indicate data collected by a specific device. The user attempting user authentication may allow the input or collection of the authentication means biometric data for access to a restricted procedure through user authentication. The type of authentication means biometric data may be preset to be used by a user or a system to perform user authentication.

The term "registered biometric data" as used herein may refer to biometric data which the user has registered or stored in a device owned by the user, that is, the user authentication device. The registered biometric data may be data serving as a criterion for determining whether the authentication means biometric data matches data of the user attempting user authentication. The type of registered biometric data may be the same as the type of authentication means biometric data. When the authentication means biometric data matches the registered biometric data, user authentication may be successfully performed, and access to a restricted procedure may be authorized.

In an embodiment, the registered biometric data may be collected through the user authentication device, a part of the user authentication device, or a device electrically or communicatively connected to the user authentication device, and may be stored in the user authentication device. For example, the user may store the registered biometric data in the user authentication device by inputting and storing the user's biometric data through a data input device provided in the user authentication device, such as a camera or a fingerprint input device.

In another embodiment, the registered biometric data may be collected through a user authentication request device and stored in a user authentication device. Specifically, the registered biometric data may be collected through the user authentication request device, transmitted to the user authentication device (or to the user authentication device through a server), and stored in the user authentication device. The registered biometric data stored through this procedure may also be used thereafter to perform the user authentication procedure in the system of the disclosure. For example, for initial authentication for use of the user authentication system, the user authentication device may collect data as the "registered biometric data" of the user. Thereafter, when the user attempts user authentication for use of the user authentication system, the user authentication device may collect data as the "authentication means biometric data" of the user. Even when the types of registered biometric data are the same (for example, facial data), the specifications of sensors which collect data may differ from device to device. Therefore, according to an embodiment, the accuracy of user verification between the registered biometric data and the authentication means biometric data may be improved.

In another embodiment, the registered biometric data may be divided and stored in a plurality of user authentication devices. Specifically, the registered biometric data may be divided into a plurality of pieces of sub-registered biometric data and respectively stored in different user authentication devices.

In an embodiment, a user verification procedure may be performed in order for the registered biometric data to be stored in the user authentication device. The user verification procedure is a procedure which should be accompanied in order to use the user authentication system of the disclosure and access the user authentication system of the disclosure, and may be understood as a type of service subscription procedure. In an embodiment, only a user who has performed the user verification procedure may store registered biometric data in the user's terminal, or only a terminal of a user for whom the user verification procedure has been performed may store registered biometric data.

In an embodiment, the user verification procedure may include an identity card verification procedure.

In an embodiment, the identity card verification procedure may include an identity card authenticity verification procedure. The identity card authenticity verification procedure may be a procedure for verifying whether an identity card possessed by a user is a forged identity card. The identity card authenticity verification procedure may be performed by capturing an image of the identity card by using a camera or a sensor of a user terminal. For example, the image capture of the identity card and the identity card authenticity verification procedure may be performed through a user authentication solution such as a user authentication application.

In an embodiment, the identity card verification procedure may include an identity card comparison procedure. The identity card comparison procedure may be a procedure for verifying whether an identity card possessed by a user is the user's identity card. The identity card comparison procedure may be performed through image capture of a user's face by using a camera or a sensor of a user terminal. For example, the image capture of the user's face and the identity card comparison procedure may be performed through a user authentication solution such as a user authentication application.

Hereinafter, a user authentication method of the disclosure is described.

A user authentication system of the disclosure may be based on various authentication methods according to an entity which determines whether biometric data match each other.

First, the user authentication system of the disclosure may be based on a user terminal authentication method (or a user authentication device authentication method). The user terminal authentication method may refer to a method in which whether authentication means biometric data matches registered biometric data is determined by a user terminal, that is, a user authentication device. The user terminal may determine whether the authentication means biometric data received from another device matches the registered biometric data stored in the user terminal by comparing the registered biometric data with the authentication means biometric data. The other device may be any one of a user authentication request device, a server, and a third device. The user terminal may transmit a comparison result value to another device (which may be the same device as the "other device" described above), and the device having received the comparison result value may permit or deny access to a restricted procedure, based on the comparison result value. Furthermore, instead of transmitting the comparison result value to another device, the user terminal may directly permit or deny access to the restricted procedure, based on the comparison result value.

Next, the user authentication system of the disclosure may be based on a user authentication request device authentication method. The user authentication request device authentication method may refer to a method in which whether authentication means biometric data matches registered biometric data is determined by the user authentication request device. The user authentication request device may determine whether the authentication means biometric data, which is collected through the user authentication request device, a part of the user authentication request device, or a device electrically or communicatively connected to the user authentication request device, matches the registered biometric data received from another device by comparing the authentication means biometric data with the registered biometric data. The other device may be any one of a user terminal (i.e., the user authentication device), a server, and a third device. The user authentication request device may permit or deny access to the restricted procedure, based on the comparison result value, or may transmit the comparison result value to another device (which may be the same device as the "other device" described above), and the device having received the comparison result value may permit or deny access to the restricted procedure, based on the comparison result value. Furthermore, instead of transmitting the comparison result value to another device, the user authentication request device may directly permit or deny access to the restricted procedure, based on the comparison result value.

Next, the user authentication system of the disclosure may be based on a server authentication method. The server authentication method may refer to a method in which whether authentication means biometric data matches registered biometric data is determined by a server. The server may determine whether the authentication means biometric data received from the user authentication request device matches the registered biometric data received from the user terminal (that is, the user authentication device) by comparing the authentication means biometric data with the registered biometric data. The server may permit or deny access to the restricted procedure, based on the comparison result value, or transmit the comparison result value to another device, and the device having received the comparison result value may permit or deny access to the restricted procedure, based on the comparison result value. Furthermore, instead of transmitting the comparison result value to another device, the server may directly permit or deny access to the restricted procedure, based on the comparison result value.

In an embodiment, in the server authentication method, the user authentication device may transmit the registered biometric data to the server, based on recognizing that the user accesses the user authentication request device. In an embodiment, the user authentication device may recognize that the user accesses the user authentication request device by receiving a signal broadcast by the user authentication request device. The signal broadcast by the user authentication request device may correspond to a beacon signal, but the disclosure is not limited thereto.

Furthermore, the server may request the user authentication request device to collect the authentication means biometric data, based on receiving the registered biometric data from the user authentication device. The user authentication request device may collect the authentication means biometric data in response to the request for collection of the authentication means biometric data, and may transmit the collected authentication means biometric data to the server. The server may generate a comparison result value by comparing the authentication means biometric data with the registered biometric data. The server may transmit the comparison result value to another device, and may permit or deny access to the restricted procedure, based on the comparison result value.

In addition, the user authentication system of the disclosure may be based on a user authentication-dedicated device authentication method. The user authentication-dedicated device authentication method may refer to a method in which whether authentication means biometric data matches registered biometric data is determined by a user authentication-dedicated device. The user authentication-dedicated device may be a device provided separately from the user terminal (or the user authentication device) or the user authentication request device, and may be a device provided individually to perform user authentication without performing other functions. The user authentication-dedicated device may receive and store the registered biometric data from the user terminal, and may determine whether the authentication means biometric data matches the registered biometric data by comparing the subsequently received authentication means biometric data with the registered biometric data. The user authentication-dedicated device may transmit a comparison result value to another device, and the other device having received the comparison result value may permit or deny access to the restricted procedure, based on the comparison result value. The other device may be any one of a user terminal, a user authentication request device, a server, and a third device.

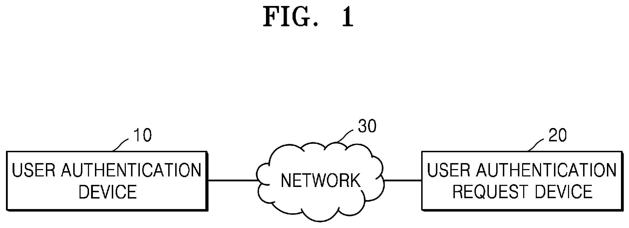

FIG. 1 is a schematic diagram of a user authentication system according to an embodiment.

The user authentication system of the disclosure may include a user authentication device 10 and a user authentication request device 20.

In the disclosure, the user authentication device 10 may refer to a device owned by a user who performs user authentication. The user authentication device 10 may be understood as a user terminal. The user terminal may include any type of device capable of storing registered biometric data and/or determining whether biometric data match each other through comparison of biometric data. For example, the user authentication device 10 may be a smartphone, a mobile phone, a tablet personal computer (PC), a PC, a personal digital assistant (PDA), a laptop, a media player, a global positioning system (GPS) device, smart glasses, a smart watch, a device on which an input/output interface such as a camera is mounted, and other mobile or non-mobile electronic devices, but the disclosure is not limited thereto.

In the disclosure, the user authentication request device 20 may refer to a device which requests performance of user authentication. The user authentication request device 20 may detect a user (physically or electronically) accessing the user authentication request device 20. The user authentication request device 20 may collect authentication means biometric data from the user. The user authentication request device 20 may transmit the authentication means biometric data to another device or determine whether biometric data match each other through comparison of biometric data. For example, the user authentication request device 20 may be a smartphone, a mobile phone, a tablet PC, a PC, a PDA, a laptop, a media player, a GPS device, smart glasses, a smart watch, a wearable device having a communication function and a data processing function, such as a hair band or a ring, a camera, a device on which an input/output interface is mounted, such as a robot including a location moving means, and other mobile or non-mobile electronic devices, but the disclosure is not limited thereto.

In the disclosure, the user authentication system may be used to permit access to a restricted procedure only to a user who has successfully completed user authentication, and the application of the user authentication system, that is, the procedure restricted by the user authentication system, may be any procedure requiring security compliance.

For example, when the procedure restricted by the user authentication system is "payment," mobile payment may be automatically approved for a user who has successfully completed user authentication. For example, when the procedure restricted by the user authentication system is "access control," access may be permitted such that an access control gate is opened for a user who has successfully completed user authentication. For example, when the procedure restricted by the user authentication system is "vehicle control," vehicle control may be permitted such that only a user who has successfully completed user authentication is permitted to start a vehicle. For example, when the procedure restricted by the user authentication system is "product purchase from a vending machine," product purchase may be permitted such that only a user who has successfully completed user authentication is permitted to select a product from the vending machine. For example, when the procedure restricted by the user authentication system is "movement to a destination," only a user who has successfully completed user authentication may be permitted to move to the destination through a transportation means on which the user is onboard. For example, when the procedure restricted by the user authentication system is "guidance to a destination," guidance to a destination may be permitted such that only a user who has successfully completed user authentication is guided to a consultation room through the user authentication request device 20. In addition to the above-described examples, the user authentication system of the disclosure may be applied to any procedure requiring security compliance.

In the disclosure, the user authentication request device 20 may be implemented as an electronic kiosk to induce user authentication for access to a restricted procedure through interaction with a user. Accordingly, the user authentication request device 20 may be implemented in various forms depending on the application of the user authentication system, that is, the place of use.

For example, when the procedure restricted by the user authentication system is "payment," the user authentication request device 20 may be implemented in the form of a point of sales (POS) terminal. For example, when the procedure restricted by the user authentication system is "access control," the user authentication request device 20 may be implemented in the form of an access control gate or an electronic device provided together with the access control gate. For example, when the procedure restricted by the user authentication system is "vehicle control" or "movement to a destination," the user authentication request device 20 may be implemented in the form of an on-board computer mounted on a vehicle. For example, when the procedure restricted by the user authentication system is "product purchase from a vending machine," the user authentication request device 20 may be implemented in the form of a vending machine. For example, when the procedure restricted by the user authentication system is "guidance to a destination," the user authentication request device 20 may be implemented in the form of a robot including a location moving means.

In the user authentication system of the disclosure, each of the user authentication device 10 and the user authentication request device 20 may transmit and receive data through the network 30. The network 30 may be implemented as a wired network, such as a local area network (LAN), a wide area network (WAN), or a value added network (VAN), or as a wireless network, such as a mobile radio communication network, a near field communication network, or a satellite communication network. Furthermore, the network 30 may be a comprehensive data communication network which enables the respective network entities illustrated in FIG. 1 to smoothly communicate with each other, and may include any type of wired Internet, wireless Internet, and mobile wireless communication network.

Although not shown in FIG. 1, the user authentication system may include a server. The server may control the overall operation of the user authentication system, and the user authentication system may further include the server for reasons such as ease of data storage, data distribution, design limitations, ease of design, and the like. In an embodiment, the user authentication device 10 or the user authentication request device 20 may transmit and receive all or part of data through the server rather than directly between each other. Specifically, the server may receive, from the user authentication request device 20, biometric data generated through the user authentication request device 20 and transmit the received biometric data to the user authentication device 10. Furthermore, the server may receive, from the user authentication device 10, a user authentication result value generated through the user authentication device 10 and transmit the received user authentication result value to the user authentication request device 20.

In an embodiment, the server may encrypt or decrypt information received from the user authentication device 10 or the user authentication request device 20 by using a preset encryption method or a preset decryption method. Furthermore, the server may transmit the encrypted or decrypted information to the user authentication device 10 or the user authentication request device 20. The encryption/decryption processes may be performed by the user authentication device 10 or the user authentication request device 20 rather than the server.

In an embodiment, the server may include a database (DB) storing identification information of the user who is permitted to access the user authentication system. Specifically, the server may store identification information of a user who possesses the user authentication device 10 on which a preset application is installed. The identification information may refer to information used to identify the user authentication device rather than the user's biometric information. For example, the identification information may include at least one of a telephone number, a membership number, or a resident registration number.

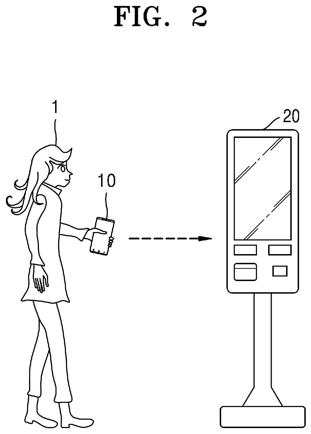

FIG. 2 is a conceptual diagram illustrating an example in which a user performs user authentication in a user authentication system according to an embodiment.

For convenience, the example illustrated in FIG. 2 is described as an example in which the procedure restricted by the user authentication system is "access control," but the disclosure is not limited thereto.

Referring to FIG. 2, a user 1 may possess a user authentication device 10. The user authentication device 10 may store registered biometric data.

The user 1 may access a user authentication request device 20. For example, the user 1 may access the user authentication request device 20 in order to release the blocking of an access control gate and pass through the access control gate.

The user authentication request device 20 may detect the access of the user 1. For example, the user authentication request device 20 may detect the access of the user 1 through a camera or a sensor mounted on or connected to the user authentication request device 20. For example, the user authentication request device 20 may detect the access of the user 1 by transmitting a specific signal or data (e.g., an authentication signal to be described below).

The user authentication request device 20 which has detected the access of the user 1 may collect authentication means biometric data of the user 1. The user 1 may input biometric data of the user 1 through a camera, a sensor, or other input/output interface mounted on or connected to the user authentication request device 20.

When the user authentication system is based on a user terminal authentication method, the user authentication request device 20 may transmit the collected authentication means biometric data to the user authentication device 10. The user authentication device 10 having received the authentication means biometric data may compare the received authentication means biometric data with stored registered biometric data. The user authentication device 10 may generate a comparison result value.

In an embodiment, the user authentication device 10 may compare the received authentication means biometric data with the stored registered biometric data by using a machine learning model prestored in the user authentication device 10. The machine learning model may generate a comparison result value by comparing the received authentication means biometric data with the stored registered biometric data. The machine learning model may refer to a model having problem-solving capabilities and trained such that nodes, which are artificial neurons forming a network through a combination of synapses as in a biological neural network, repeatedly adjust weights of the synapses so as to reduce an error between a correct output corresponding to a specific input and an inferred output.

When the user authentication system is based on a user authentication request device authentication method, the user authentication request device 20 may receive registered biometric data from the user authentication device 10. The user authentication request device 20 may transmit, to the user authentication device 10, a signal requesting the registered biometric data. The user authentication device 10 having received the signal requesting the registered biometric data may transmit the registered biometric data to the user authentication request device 20. The user authentication request device 20 having received the registered biometric data may compare the received registered biometric data with the collected authentication means biometric data. The user authentication request device 20 may generate a comparison result value.

In the example of FIG. 2, whether the user 1 is permitted to enter may be determined according to the generated comparison result value. For example, when the generated comparison result value indicates that the two pieces of biometric data match each other, the blocking of the access control gate for the user 1 may be released. For example, when the generated comparison result value indicates that the two pieces of biometric data do not match each other, the blocking of the access control gate for the user 1 may be maintained.

After user authentication is performed through the user authentication system, the authentication means biometric data used for performing user authentication may be deleted. In an embodiment, the user authentication device 10 may delete the authentication means biometric data used for generating a user authentication result value immediately after the generation of the user authentication result value. In another embodiment, the user authentication request device 20 may delete the authentication means biometric data collected according to the reception of the user authentication request signal immediately after the reception of the user authentication result value from the user authentication device 10.

The user authentication system may require an additional authentication procedure in addition to the user authentication through the biometric data. When security is required, for example, when the security level of a region the user intends to access is higher than that of other regions, or when the amount of payment intended by the user exceeds a preset amount, the user authentication system may require an additional authentication procedure from the user. In an embodiment, the additional authentication procedure may be required only when the registered biometric data matches the authentication means biometric data.

In an embodiment, the additional authentication procedure may include an identity card comparison procedure. The identity card comparison procedure may be a procedure for verifying whether an identity card possessed by a user is the user's identity card. The identity card comparison procedure may include capturing an image of the identity card, capturing an image of the user's face, and comparing the image of the identity card with the image of the user's face through a camera or a sensor of the user authentication device 10 or the user authentication request device 20.

In the user authentication system, a method of specifying the user authentication device 10 may be an issue. That is, how to specify a target to which the user authentication request device 20 transmits the collected authentication means biometric data or requests transmission of the registered biometric data may be an issue.

In an embodiment, the user authentication request device 20 may specify the user authentication device 10, based on identification information input by the user 1. In an embodiment, the user authentication request device 20 may include an interface which allows the user 1 to input device identification data, and may receive the device identification data input by the user 1 through the interface. The device identification data may be data used to identify the user terminal, i.e., the user authentication device 10. For example, the device identification data may include at least one of a telephone number, a membership number, or a resident registration number.

In another embodiment, the user authentication request device 20 may specify the user authentication device 10 by detecting a nearest device. In an embodiment, the user authentication request device 20 may detect the nearest device by using any suitable method. For example, the user authentication request device 20 may include a plurality of nodes or channels, and may measure a distance, based on signals transmitted and received between the plurality of nodes or channels and the user authentication device 10. For example, the plurality of nodes or channels may be nodes or channels for transmitting and receiving beacon signals.

In another embodiment, the user authentication request device 20 may specify the user authentication device 10, based on a prearranged sound signal. In an embodiment, the prearranged sound signal may refer to a sound signal which is detectable by the user authentication device 10 in the user authentication system. The user authentication device 10 may detect the sound signal and determine whether the detected sound signal is the prearranged sound signal transmitted by the user authentication request device 20. When the user authentication device 10 determines that the detected sound signal is the prearranged sound signal, the user authentication device 10 may transmit device identification data of the user authentication device 10 to the user authentication request device 20 or a server. The user authentication request device 20 may specify the user authentication device 10, based on the device identification data.

In another embodiment, the user authentication request device 20 may specify the user authentication device 10, based on user identification data received from the server. Specifically, the user authentication request device 20 may transmit the collected authentication means biometric data to the server, and the server may search for user identification data from a DB storing pieces of identification information of a plurality of users, based on the authentication means biometric data. Furthermore, the server may transmit the obtained user identification data to the user authentication request device 20, and the user authentication request device 20 may specify the user authentication device 10, based on the obtained user identification data.

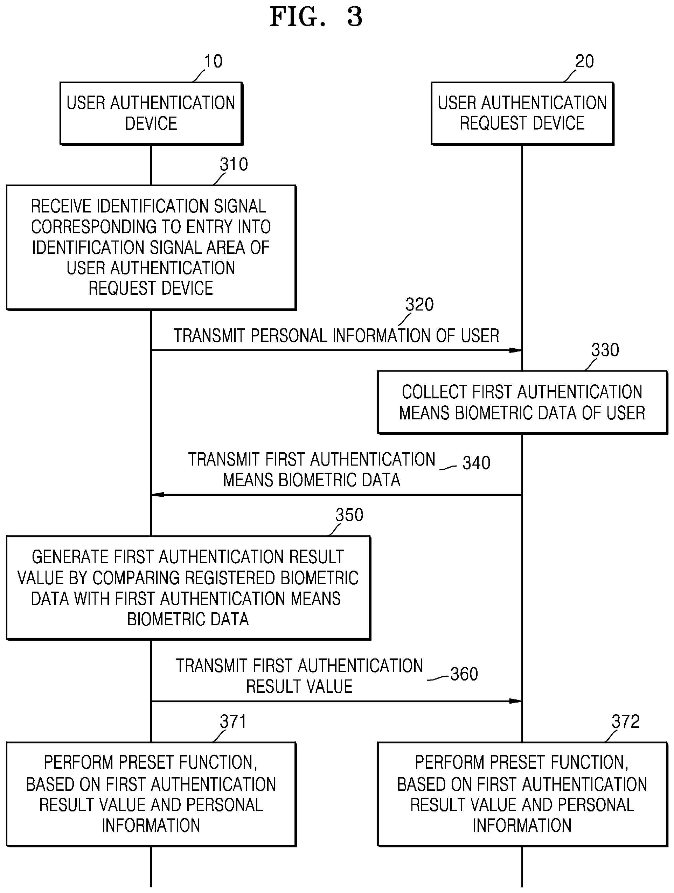

FIG. 3 is a flowchart of a method of performing user authentication through a user authentication device authentication method and performing a preset function, according to an embodiment.

Referring to FIG. 3, a user authentication system may include a user authentication device 10, a user authentication request device 20, and a server (not shown).

A user may access the user authentication request device 20 to perform user authentication, while carrying the user authentication device 10. Specifically, the user may enter an identification signal area of the user authentication request device 20, while carrying the user authentication device 10 owned by the user.

In an embodiment, the identification signal area may refer to an area in which an identification signal broadcast by the user authentication request device 20 may be received. In an embodiment, the identification signal may refer to a beacon signal. In an embodiment, the identification signal may refer to an AltBeacon signal.

In an embodiment, the identification signal area may be set based on a location of the user authentication request device 20. Furthermore, the identification signal area may be set based on at least one of a type or an intensity of the broadcast identification signal.

In an embodiment, the user authentication device 10 may determine whether the user authentication device 10 has entered the identification signal area. In an embodiment, the user authentication device 10 may determine whether the user authentication device 10 has entered the identification signal area, based on at least one of a current location of the user authentication device 10 or a Bluetooth signal.

In an embodiment, in operation 310, the user authentication device 10 may receive the identification signal corresponding to entry into the identification signal area of the user authentication request device 20.

In an embodiment, the user authentication device 10 may receive the identification signal broadcast from the user authentication request device 20 by using an identification signal scanning function of the user authentication device 10. For example, the user authentication device 10 may receive the identification signal, based on the identification signal scanning function of the user authentication device 10 being in an on state. When the identification signal scanning function of the user authentication device 10 is in an off state, the user authentication device 10 may not receive the identification signal.

In an embodiment, the user authentication device 10 may change the state (the on state and the off state) of the identification signal scanning function so as to efficiently scan the identification signal and accurately receive the broadcast identification signal.

In an embodiment, in operation 320, the user authentication device 10 may transmit personal information of the user to the user authentication request device 20.

For example, the personal information of the user may refer to information capable of identifying users from each other, excluding security-sensitive biometric information. Specifically, the personal information of the user may include at least one of a user's name, nickname, identifier (ID), telephone number, address, customer information, preferred order information, or preferred visit information, but the disclosure is not limited thereto. The preferred order information may refer to information about goods or foods preferred by the user at a specific place, that is, goods or food items frequently ordered by the user. Furthermore, the preferred visit information may refer to information about places that the user has frequently visited in a specific place or where the user has frequently stayed.

In an embodiment, the user authentication device 10 may obtain information about a place visited by the user by using identification information included in the identification signal received from the user authentication request device 20. Furthermore, the user authentication device 10 may generate the preferred order information and the preferred visit information of the user for the corresponding place, based on information about the corresponding place.

In an embodiment, the user authentication device 10 may directly transmit the personal information of the user to the user authentication request device 20. In another embodiment, the user authentication device 10 may transmit the personal information of the user to the user authentication request device 20 through a proxy server. The server may refer to a real time database (RTDB), but the disclosure is not limited thereto.

In an embodiment, in operation 330, the user authentication request device 20 may collect first authentication means biometric data of the user.

For example, the user authentication request device 20 may collect biometric data of the user located in front of an imaging sensor of the user authentication request device 20 by using the imaging sensor included in the user authentication request device 20 and capable of sensing the body part of the user.

In an embodiment, the authentication means biometric data may be any one of various types of biometric data among a user's fingerprint, pupil, iris, retina, face, voice, vein, DNA, signature, handwriting, blinking pattern, skeletal structure, ear shape, palm pattern, body temperature pattern, gait pattern, heart rate pattern, electrocardiogram pattern, lip shape and movement, tongue shape and movement, brainwave pattern, finger joint shape, skin pattern and texture, kinetic signature, neural network pattern, muscle pattern, blood flow pattern, tear composition, respiration pattern, and facial blood flow pattern, or may be any combination of two or more types of biometric data. In an embodiment, the user authentication request device 20 may collect biometric data by detecting the access of the user authentication device 10.

In an embodiment, in operation 340, the user authentication request device 20 may transmit the first authentication means biometric data of the user to the user authentication device 10.

In an embodiment, the user authentication request device 20 may transmit the directly collected authentication means biometric data to the user authentication device 10. In another embodiment, the user authentication request device 20 may transmit the first authentication means biometric data to the user authentication device 10 through the proxy server. The server may refer to an RTDB, but the disclosure is not limited thereto.

Specifically, the user authentication device 10 may monitor the authentication means biometric data collected by the user authentication request device 20 in real time through the RTDB server. For example, the user authentication device 10 may monitor real-time information of the user authentication request device 20 through the RTDB server, based on the identification signal received from the user authentication request device 20. Furthermore, the user authentication device 10 may obtain the authentication means biometric data collected by the user authentication request device 20 and reflected in real time through monitoring.

In an embodiment, in operation 350, the user authentication device 10 may generate a first authentication result value by comparing registered biometric data prestored in the user authentication device 10 with the first authentication means biometric data.

The first authentication result value may be a value indicating whether the registered biometric data matches the first authentication means biometric data.

In an embodiment, in operation 360, the user authentication device 10 may transmit the first authentication result value to the user authentication request device 20.

In an embodiment, the user authentication device 10 may directly transmit the first authentication result value to the user authentication request device 20. In another embodiment, the user authentication device 10 may transmit the first authentication result value to the user authentication request device 20 through the proxy server.

However, when the user authentication device 10 directly transmits, to the user authentication request device 20, a signal instructing performance of a preset function, based on the first authentication result value, the process in which the user authentication device 10 transmits the first authentication result value to the user authentication request device 20 may be omitted.

In an embodiment, in operation 372, the user authentication request device 20 may perform the preset function, based on the first authentication result value and the personal information.

For example, the user authentication request device 20 may determine whether the first authentication result value is a value indicating that the first authentication means biometric data matches the registered biometric data. Furthermore, the user authentication request device 20 may perform the preset function, based on determining that the first authentication result value is a value indicating that the first authentication means biometric data matches the registered biometric data.

In an embodiment, the preset function may refer to an access control function. Specifically, the user authentication request device 20 may perform control such that an access control device included in the user authentication request device 20 is opened, based on determining that the first authentication result value is a value indicating that the first authentication means biometric data matches the registered biometric data. Furthermore, the authentication request device may transmit a signal instructing permission of access, such as unlocking or opening a door through an access control device separated from the user authentication request device 20, based on determining that the first authentication result value is a value indicating that the first authentication means biometric data matches the registered biometric data.

Furthermore, the user authentication request device 20 may obtain authority information indicating whether the user has authority to access a specific place by using the personal information of the user. Furthermore, the user authentication request device 20 may permit the user's access, based on the authority information indicating that the user is permitted to access the specific place and the first authentication result value being a value indicating that the first authentication means biometric data matches the registered biometric data.

In another embodiment, the preset function may refer to a payment function. For example, the user authentication request device 20 may request payment while transmitting the personal information of the user to an external payment server, based on determining that the first authentication result value is a value indicating that the first authentication means biometric data matches the registered biometric data.

In another embodiment, in operation 371, the user authentication device 10 may perform the preset function, based on the first authentication result value and the personal information.

For example, the user authentication device 10 may directly perform the preset function without transmitting the first authentication result value to the user authentication request device 20.

In an embodiment, the user authentication device 10 may transmit, to the user authentication request device 20, a signal instructing performance of the preset function, based on determining that the first authentication result value is a value indicating that the first authentication means biometric data matches the registered biometric data.

In another embodiment, the user authentication device 10 may receive, from the user authentication request device 20, authority information indicating whether the user has authority to request performance of the preset function by using the personal information of the user, based on determining that the first authentication result value is a value indicating that the first authentication means biometric data matches the registered biometric data. Furthermore, the user authentication device 10 may perform the preset function by using the authority information.

The user authentication device 10 may rapidly and efficiently perform the preset function, such as access control or payment, after completion of user authentication by transmitting, to the user authentication request device 20, the personal information of the user that is relatively less sensitive to security, when the user enters the identification signal area of the user authentication request device 20 regardless of whether user authentication is completed.

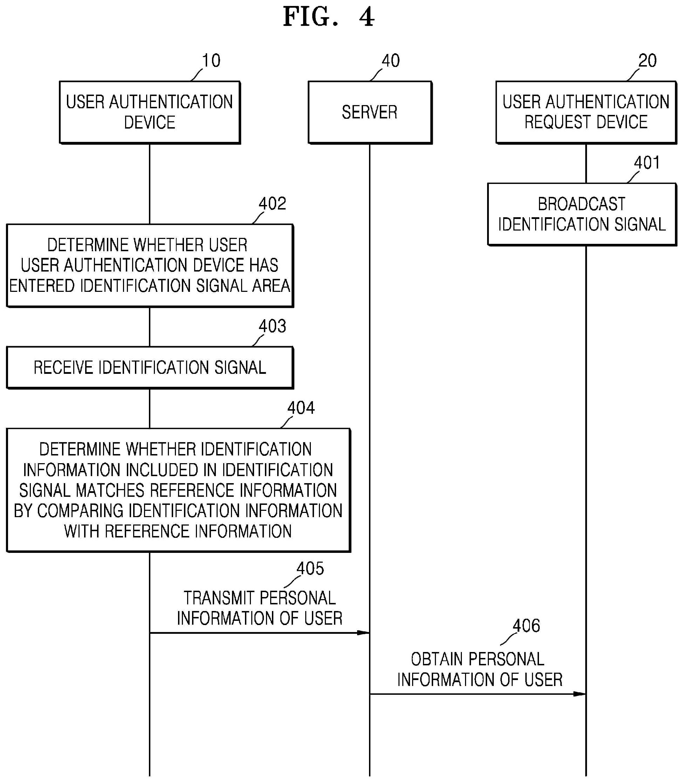

FIG. 4 is a flowchart of a method, performed by a user authentication device, of transmitting personal information to a user authentication request device, according to an embodiment.

Descriptions of parts of the embodiments described with reference to FIG. 3, which may be equally applied to or analogously applied to the embodiment illustrated in FIG. 4, are omitted.

In an embodiment, in operation 401, the user authentication request device 20 may broadcast an identification signal. The identification signal may refer to a wireless communication-based signal, such as a beacon signal, capable of identifying the user authentication request device 20.

In an embodiment, in operation 402, the user authentication device 10 may determine whether the user authentication device 10 has entered the identification signal area. In an embodiment, the user authentication device 10 may determine whether the user authentication device 10 has entered the identification signal area, based on at least one of a real-time location or a Bluetooth signal.

In an embodiment, the user authentication device 10 may determine whether the user authentication device 10 has entered the identification signal area, based on a current location of the user authentication device 10. Specifically, the user authentication device 10 may determine whether the current location of the user authentication device 10 is included within the identification signal area of the user authentication request device 20, based on a location detection function of the user authentication device 10.

In an embodiment, the user authentication device 10 may update the current location of the user authentication device 10 at predefined time intervals.

In another embodiment, the user authentication device 10 may determine whether the user authentication device 10 has entered the identification signal area, based on a Bluetooth signal. Specifically, the user authentication device 10 may transmit a first Bluetooth signal. Furthermore, the user authentication request device 20 may transmit a second Bluetooth signal. When the first Bluetooth signal transmitted by the user authentication device 10 and the second Bluetooth signal transmitted by the user authentication request device 20 communicate with each other, the user authentication device 10 may determine that the user authentication device 10 has entered the identification signal area.

In another embodiment, the user authentication device 10 may determine whether the user authentication device 10 has entered the identification signal area, based on activation of a user authentication application installed on the user authentication device 10.

In another embodiment, the user authentication device 10 may determine whether the user authentication device 10 has entered the identification signal area, based on activation of the user authentication device 10 itself. For example, the user authentication device 10 may be activated when a screen in an off state is turned on by a user operation or reception of a notification.

In an embodiment, in operation 403, the user authentication device 10 may receive an identification signal broadcast by the user authentication request device 20, based on determining that the user authentication device 10 has entered the identification signal area. When the user authentication device 10 has not entered the identification signal area, the user authentication device 10 may not receive the identification signal.

In an embodiment, the user authentication device 10 may receive the identification signal by using an identification signal scanning function of the user authentication device 10. Specifically, the user authentication device 10 may receive the identification signal only when the identification signal scanning function is in an on state.

In an embodiment, in operation 404, the user authentication device 10 may determine whether identification information included in the identification signal matches prestored reference information by comparing the identification information with the prestored reference information.

Specifically, the identification information may include first identification information, second identification information, and third identification information. In an embodiment, the first identification information may refer to a universally unique identifier (UUID). The UUID is a 16-byte identifier. In an embodiment, the second identification information may refer to a major identifier. The major identifier may refer to an identifier used to distinguish beacon signals having the same UUID. In an embodiment, the third identification information may refer to a minor identifier. The minor identifier may refer to an identifier used to distinguish beacon signals having the same UUID and major identifier.

Furthermore, the reference information may include first reference information, second reference information, and third reference information. In an embodiment, the first reference information may refer to a UUID. The UUID is a 16-byte identifier. In an embodiment, the second reference information may refer to a major identifier. The major identifier may refer to an identifier used to distinguish beacon signals having the same UUID. In an embodiment, the third reference information may refer to a minor identifier. The minor identifier may refer to an identifier used to distinguish beacon signals having the same UUID and major identifier.

In an embodiment, the user authentication device 10 may determine whether the first identification information, the second identification information, and the third identification information match the first reference information, the second reference information, and the third reference information, respectively.

In an embodiment, in operation 405, the user authentication device 10 may transmit the personal information of the user, excluding biometric information of the user, to the server 40, based on determining that the identification information matches the reference information. When the identification information does not match the reference information, the user authentication device 10 may not transmit the personal information of the user to an external entity, such as the server 40 or the user authentication request device 20.

Furthermore, the user authentication device 10 may determine whether the distance to the user authentication request device 20 is equal to or less than a predefined reference distance, based on determining that the identification information matches the reference information.

Specifically, the user authentication device 10 may calculate the distance between the user authentication device 10 and the user authentication request device 20, based on a strength of the identification signal. Furthermore, the user authentication device 10 may determine whether the distance to the user authentication request device 20 is equal to or less than the predefined reference distance.

In an embodiment, the user authentication device 10 may transmit the personal information of the user to the server, based on determining that the distance to the user authentication request device 20 is equal to or less than the predefined reference distance. When the distance to the user authentication request device 20 is greater than the predefined reference distance, the user authentication device 10 may not transmit the personal information of the user to an external entity, such as the server 40 or the user authentication request device 20.

In an embodiment, the user authentication device 10 may identify the user authentication request device 20 to which the personal information is to be transmitted among the plurality of user authentication request devices stored in the server 40, based on the identification information included in the identification signal.

In an embodiment, in operation 406, the user authentication request device 20 may obtain the personal information of the user from the server 40. For example, the user authentication request device 20 may obtain the personal information of the user from the server 40 serving as a proxy server.

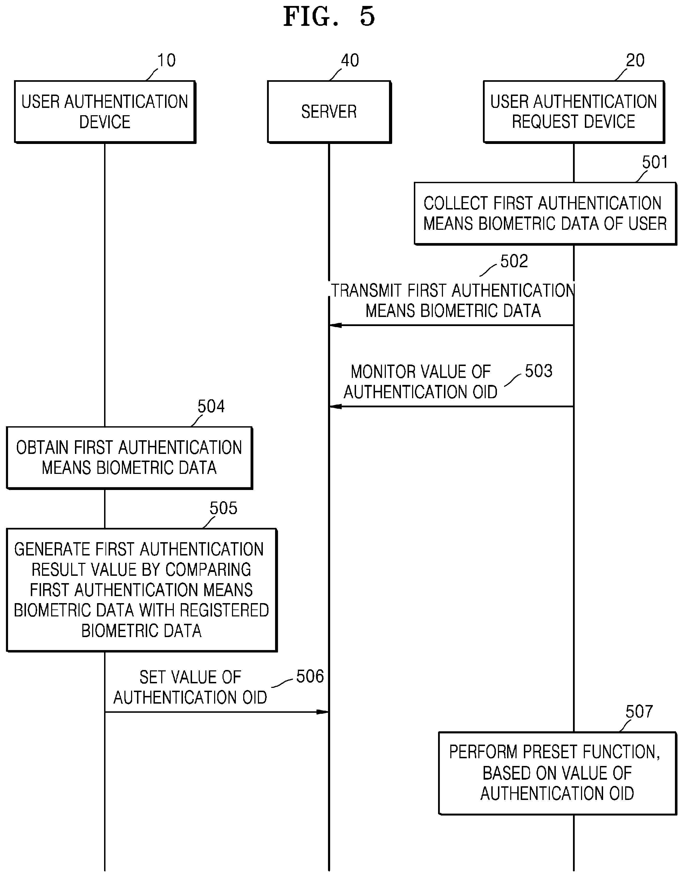

FIG. 5 is a flowchart of a method of performing user authentication through a user authentication device authentication method, according to an embodiment.

Descriptions of parts of the embodiments described with reference to FIG. 4, which may be equally applied to or analogously applied to the embodiment illustrated in FIG. 5, are omitted.

In an embodiment, in operation 501, the user authentication request device 20 may collect first authentication means biometric data of a user.

In an embodiment, in operation 502, the user authentication request device 20 may transmit the first authentication means biometric data to a server 40.

In an embodiment, in operation 503, the user authentication request device 20 may monitor a value of an authentication identifier through the server 40. The authentication identifier may refer to a unique identifier issued to perform a preset function according to user authentication for the user. Specifically, the authentication identifier may refer to a transaction identifier, that is, an identifier issued for a transaction to be performed after successful user authentication of the user.

In an embodiment, the user authentication request device 20 may request the server 40 to issue the authentication identifier, based on obtaining the first authentication means biometric data. While approving the issuance of the authentication identifier, the server 40 may directly issue the authentication identifier and transmit the issued authentication identifier to the user authentication request device 20.

Thereafter, the user authentication request device 20 may transmit the first authentication means biometric data and the authentication identifier to the server 40. In an embodiment, the server 40 may store the first authentication means biometric data and the authentication identifier as the real-time information of the user authentication request device 20.

Specifically, the server 40 may issue an authentication identifier "100103037" in response to an authentication identifier issuance request of the user authentication request device 20 corresponding to K01, which is a unique number of the user authentication request device 20, and transmit the issued authentication identifier to the user authentication request device 20, and the user authentication request device 20 may transmit the first authentication means biometric data and the issued authentication identifier to the server 40. The server 40 may store the authentication identifier "100103037" and the first authentication means biometric data in the real-time information of the user authentication request device 20 corresponding to K01 among the pieces of real-time information of the user authentication request device 20 stored in the server 40.

In an embodiment, in operation 504, the user authentication device 10 may obtain the first authentication means biometric data from the server 40. Furthermore, the user authentication device 10 may obtain the authentication identifier.

In an embodiment, in operation 505, the user authentication device 10 may generate a first authentication result value by comparing the first authentication means biometric data with registered biometric data.

In an embodiment, in operation 506, the user authentication device 10 may set the value of the authentication identifier stored in the server 40 according to the first authentication result value. Specifically, when the first authentication result value is a value indicating that the first authentication means biometric data matches the registered biometric data, the user authentication device 10 may set the value of the authentication identifier to "TRUE." "TRUE" is a value indicating that user authentication has succeeded, and thus, the server 40 or the user authentication request device 20 is able to perform a preset function.

When the first authentication result value is a value indicating that the first authentication means biometric data does not match the registered biometric data, the user authentication device 10 may set the value of the authentication identifier to "FALSE." "FALSE" is a value indicating that user authentication has failed, and thus, the server 40 or the user authentication request device 20 is unable to perform a preset function.

In an embodiment, in operation 507, the user authentication request device 20 may perform the preset function, based on the value of the authentication identifier.

In an embodiment, because the user authentication request device 20 monitors the value of the authentication identifier through the server 40, the user authentication request device 20 may perform the preset function when the value of the authentication identifier stored in the server 40 is set to a value indicating that the preset function may be performed.

In an embodiment, the preset function may refer to any function requiring user authentication, such as access permission, check-in and check-out recording, or adult authentication.

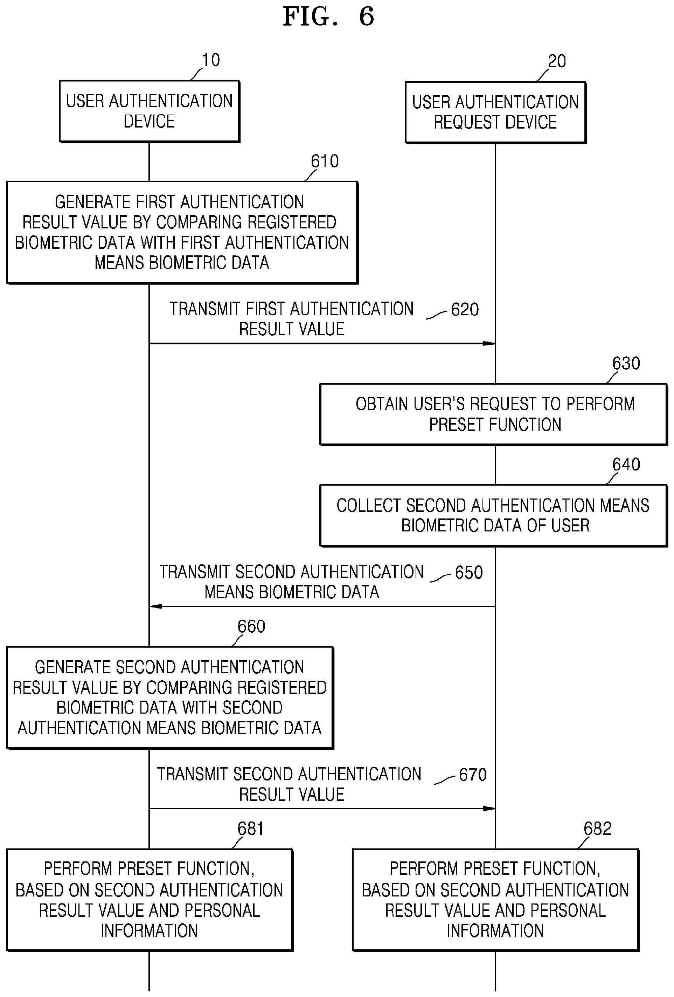

FIG. 6 is a flowchart of a method of re-performing user authentication through a user authentication device authentication method, based on obtaining a user's request to perform a preset function, according to an embodiment.

Descriptions of parts of the embodiments described with reference to FIGS. 4 and 5, which may be equally applied to or analogously applied to the embodiment illustrated in FIG. 6, are omitted.

In an embodiment, in operation 610, a user authentication device 10 may generate a first authentication result value by comparing first authentication means biometric data received from a user authentication request device 20 with registered biometric data.

In an embodiment, in operation 620, the user authentication device 10 may transmit the first authentication result value to the user authentication request device 20.

In an embodiment, the user authentication device 10 may directly transmit the first authentication result value to the user authentication request device 20. In another embodiment, the user authentication device 10 may transmit the first authentication result value to the user authentication request device 20 through a proxy server.

However, when the user authentication device 10 directly performs the preset function, based on the first authentication result value, the process of transmitting the first authentication result value to the user authentication request device 20 may be omitted.

In an embodiment, in operation 630, the user authentication request device 20 may obtain a user's request to perform the preset function.

Specifically, the user authentication request device 20 may obtain the user's request to perform the preset function through an input/output interface included in the user authentication request device 20.

In an embodiment, the user authentication request device 20 may obtain a payment request for a menu selected by the user in a store.

In an embodiment, in operation 640, the user authentication request device 20 may collect second authentication means biometric data so as to re-perform user authentication in response to a user's request to perform the preset function.

In an embodiment, the user authentication request device 20 may collect second authentication means biometric data of a user located in front of the user authentication request device 20 at the time when the user requests performance of the preset function.

In an embodiment, in operation 650, the user authentication request device 20 may transmit the second authentication means biometric data to the user authentication device 10.

In an embodiment, the user authentication request device 20 may transmit the recollected second authentication means biometric data to the user authentication device 10 which generated the first authentication result value indicating that the first authentication means biometric data matches the registered biometric data.

In an embodiment, the user authentication request device 20 may directly transmit the second authentication means biometric data to the user authentication device 10. In another embodiment, the user authentication request device 20 may transmit the second authentication means biometric data to the user authentication device 10 through the proxy server.

In an embodiment, in operation 660, the user authentication device 10 may generate a second authentication result value by comparing the registered biometric data with the second authentication means biometric data.

In an embodiment, in operation 670, the user authentication device 10 may transmit the second authentication result value to the user authentication request device 20.

In an embodiment, the user authentication device 10 may directly transmit the second authentication result value to the user authentication request device 20. In another embodiment, the user authentication device 10 may transmit the second authentication result value to the user authentication request device 20 through the proxy server.

In an embodiment, in operation 681, the user authentication device 10 may perform the preset function, based on the second authentication result value and personal information.

For example, when the user authentication device 10 directly performs the preset function, based on the second authentication result value and the personal information, the process of transmitting the second authentication result value in operation 670 may be omitted.

In another embodiment, in operation 682, the user authentication request device 20 may perform the preset function, based on the second authentication result value and the personal information.

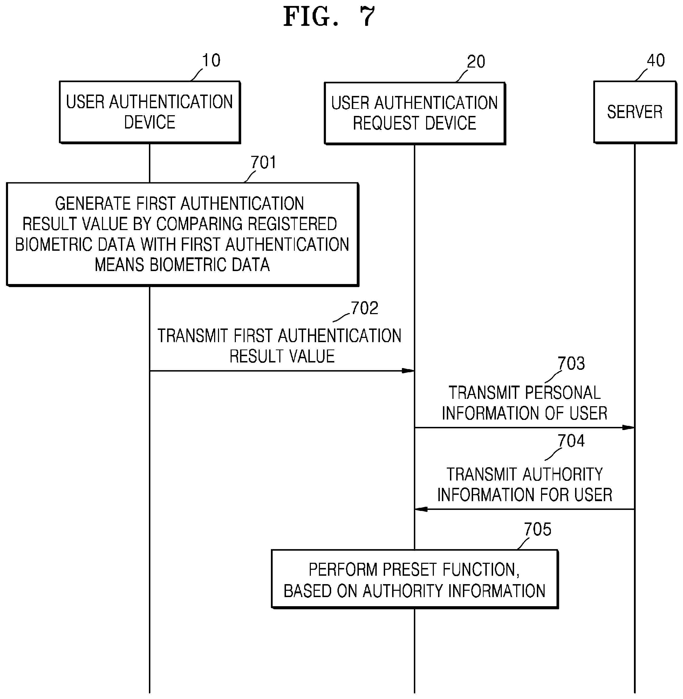

FIG. 7 is a flowchart of a method of obtaining authority information for a user from a server and performing a preset function, according to an embodiment.

Descriptions of parts of the embodiments described with reference to FIGS. 4 to 6, which may be equally applied to or analogously applied to the embodiment illustrated in FIG. 7, are omitted.

In an embodiment, in operation 701, a user authentication device 10 may generate a first authentication result value by comparing the registered biometric data with the first authentication means biometric data.

In an embodiment, in operation 702, the user authentication device 10 may transmit the first authentication result value to the user authentication request device 20.

In an embodiment, the user authentication device 10 may include additional personal information of the user in the first authentication result value transmitted to the user authentication request device 20, in addition to the value indicating whether the first authentication means biometric data matches the registered biometric data.

Specifically, only when the first authentication means biometric data matches the registered biometric data, the user authentication device 10 may include the personal information of the user in the first authentication result value.

For example, the user authentication device 10 may include, in the first authentication result value, personal information of the user which is relatively less sensitive to security, such as a name, an ID, and a customer number.

In an embodiment, in operation 703, the user authentication request device 20 may transmit the personal information of the user to the server 40.

In an embodiment, the user authentication request device 20 may transmit the personal information of the user to the server 40, based on determining that the first authentication result value is a value indicating that the first authentication means biometric data matches the registered biometric data.

Specifically, the user authentication request device 20 may transmit, to the server 40, personal information of a user corresponding to the personal information included in the first authentication result value among pieces of personal information of a plurality of users, which are obtained by the user authentication request device 20.

For example, the user authentication request device 20 may transmit, to the server 40, only personal information necessary to obtain authority information for the user from the server 40 among various types of personal information included in the personal information of the user. Specifically, the user authentication request device 20 may transmit, to the server 40, only a customer number included in the personal information of the user.

In an embodiment, in operation 704, the server 40 may transmit the authority information for the user to the user authentication request device 20.

In an embodiment, the authority information may refer to information indicating whether the user has authority to request performance of a preset function. Specifically, the authority information may refer to information indicating whether the user has authority to access a specific place.

In an embodiment, the server 40 may store authority information corresponding to the personal information of the user. Specifically, the server 40 may store authority information for personal information of each of users registered in the user authentication system. Furthermore, the server 40 may transmit, to the user authentication request device 20, the authority information corresponding to the personal information of the user received from the user authentication request device 20.

In an embodiment, in operation 705, the user authentication request device 20 may perform the preset function, based on the authority information.

In an embodiment, when the authority information indicates that the user has authority to request performance of the preset function, the user authentication request device 20 may perform the preset function.

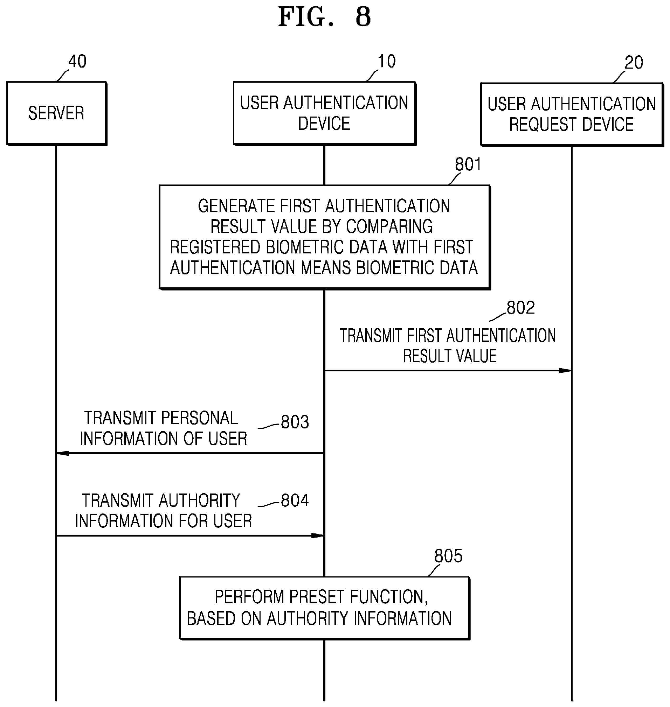

FIG. 8 is a flowchart of a method of obtaining authority information for a user from a server and performing a preset function, according to another embodiment.

Descriptions of parts of the embodiments described with reference to FIGS. 4 to 7, which may be equally applied to or analogously applied to the embodiment illustrated in FIG. 8, are omitted.

In an embodiment, in operation 801, a user authentication device 10 may generate a first authentication result value by comparing the registered biometric data with the first authentication means biometric data.

In an embodiment, in operation 802, the user authentication device 10 may transmit the first authentication result value to the user authentication request device 20. However, when the user authentication device 10 directly performs the preset function, the process of transmitting the first authentication result value to the user authentication request device 20 may be omitted.

In an embodiment, in operation 803, the user authentication device 10 may transmit personal information of a user to the server 40.

For example, the user authentication device 10 may transmit, to the server 40, only personal information necessary to obtain authority information for the user from the server 40 among various types of personal information included in the personal information of the user. Specifically, the user authentication device 10 may transmit, to the server 40, only a customer number included in the personal information of the user.

In an embodiment, in operation 804, the server 40 may transmit authority information for the user to the user authentication device 10.

In an embodiment, the authority information may refer to information indicating whether the user has authority to request performance of a preset function. Specifically, the authority information may refer to information indicating whether the user has authority to access a specific place.

In an embodiment, the server 40 may store authority information corresponding to the personal information of the user. Specifically, the server 40 may store authority information for personal information of each of users registered in the user authentication system. Furthermore, the server 40 may transmit, to the user authentication device 10, the authority information corresponding to the personal information of the user received from the user authentication request device 20.

In an embodiment, in operation 805, the user authentication device 10 may perform the preset function, based on the authority information.

In an embodiment, when the authority information indicates that the user has authority to request performance of the preset function, the user authentication device 10 may perform the preset function. In another embodiment, when the authority information indicates that the user has authority to request performance of the preset function, the user authentication device 10 may transmit, to the user authentication request device 20, a signal instructing performance of the preset function.

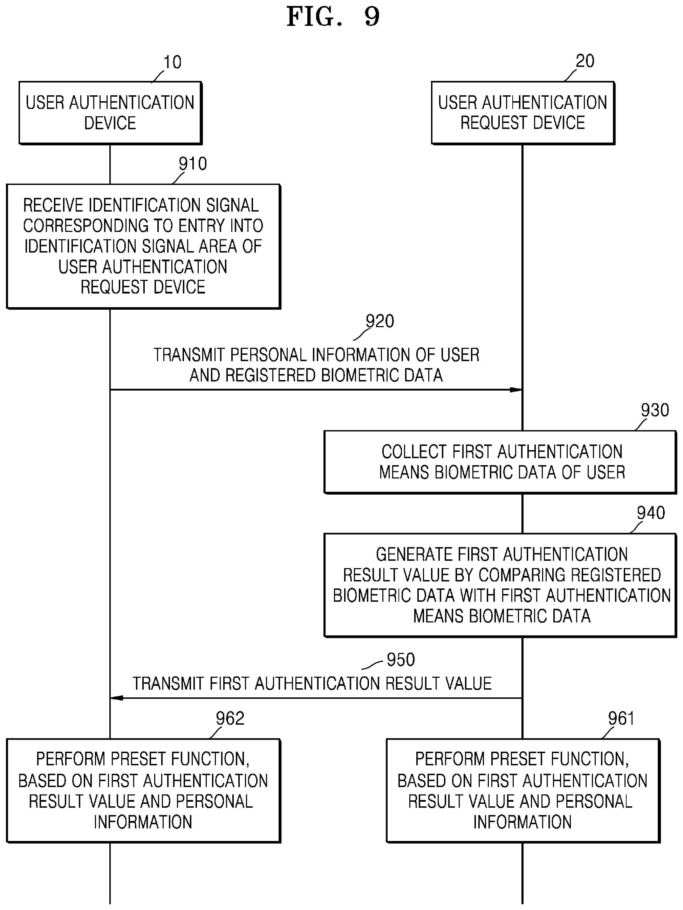

FIG. 9 is a flowchart of a method of performing user authentication through a user authentication request device authentication method and performing a preset function, according to an embodiment.

Referring to FIG. 9, unlike in FIG. 3 in which user authentication is performed through the user authentication device authentication method, a user authentication system may perform user authentication and perform a preset function through a user authentication request device authentication method. Descriptions of parts of the embodiments described with reference to FIGS. 3 to 8, which may be equally applied to or analogously applied to the embodiment illustrated in FIG. 9, are omitted.

In an embodiment, in operation 910, a user authentication device 10 may receive an identification signal corresponding to entry into an identification signal area of a user authentication request device 20.

In an embodiment, in operation 920, the user authentication device 10 may transmit personal information of a user and registered biometric data to the user authentication request device 20.

In an embodiment, the user authentication device 10 may directly transmit the personal information and the registered biometric data to the user authentication request device 20. In another embodiment, the user authentication device 10 may transmit the personal information and the registered biometric data to the user authentication request device 20 through a proxy server.

In an embodiment, the user authentication device 10 may transmit the personal information of the user to the user authentication request device 20 and then separately transmit the registered biometric data. In another embodiment, the user authentication device 10 may transmit the registered biometric data of the user to the user authentication request device 20 and then separately transmit the personal information of the user.

In an embodiment, the user authentication device 10 may encrypt the personal information and the registered biometric data, which may be sensitive to security, by using a prestored encryption method and transmit the encrypted personal information and encrypted registered biometric data to the user authentication request device 20.

However, the user authentication device 10 may doubly encrypt the registered biometric data, which may be more sensitive to security than the personal information, and transmit the doubly encrypted registered biometric data to the user authentication request device 20.

The user authentication request device 20 may obtain the personal information and the registered biometric data by decrypting the encrypted personal information and the encrypted registered biometric data by using a decryption method prestored in the user authentication request device 20. For example, the user authentication request device 20 may obtain the personal information by decrypting the encrypted personal information by using an A decryption method, and may obtain the registered biometric data by decrypting the encrypted registered biometric data by using the A decryption method and a B decryption method.

Accordingly, the user authentication request device 20 may obtain personal information and registered biometric data from the user authentication device 10 of each of a plurality of users located within the identification signal area. For example, the user authentication request device 20 may store the personal information and the registered biometric data, which are obtained from the same user authentication device 10, in association with each other. Specifically, the user authentication request device 20 may store first personal information and first registered biometric data of a first user, which are obtained from a first user authentication device, in association with each other, and may store second personal information and second registered biometric data of a second user, which are obtained from a second user authentication device, in association with each other.

In an embodiment, in operation 930, the user authentication request device 20 may collect the first authentication means biometric data of the user.

In an embodiment, in operation 940, the user authentication request device 20 may generate a first authentication result value by comparing the registered biometric data with the first authentication means biometric data.

In an embodiment, the user authentication request device 20 may compare each of a plurality of pieces of registered biometric data obtained from a plurality of user authentication devices 10 with the first authentication means biometric data. Furthermore, when there is registered biometric data matching the first authentication means biometric data among the plurality of pieces of registered biometric data, the user authentication request device 20 may generate the first authentication result value indicating that the first authentication means biometric data matches the registered biometric data. Furthermore, when there is no registered biometric data matching the first authentication means biometric data among the plurality of pieces of registered biometric data, the user authentication request device 20 may generate the first authentication result value indicating that the first authentication means biometric data does not match the registered biometric data.

In an embodiment, in operation 950, the user authentication request device 20 may transmit the generated first authentication result value to the user authentication device 10.

In an embodiment, the user authentication request device 20 may transmit the first authentication result value to the user authentication device 10, in which the registered biometric data matching the first authentication means biometric data is stored, by using personal information associated with the registered biometric data.

In an embodiment, the user authentication request device 20 may transmit the personal information of the user to the user authentication device 10 together with the generated first authentication result value.

In an embodiment, the user authentication request device 20 may directly transmit the first authentication result value to the user authentication device 10. In another embodiment, the user authentication request device 20 may transmit the first authentication result value to the user authentication device 10 through the proxy server.

However, when the user authentication request device 20 directly performs the preset function, the process of transmitting the first authentication result value to the user authentication device 10 may be omitted.

In an embodiment, in operation 961, the user authentication request device 20 may perform the preset function, based on the personal information and the first authentication result value.

In an embodiment, when the first authentication result value is a value indicating that the first authentication means biometric data matches the registered biometric data, the user authentication request device 20 may perform the preset function by using the personal information associated with the registered biometric data matching the first authentication means biometric data.

In an embodiment, the user authentication request device 20 may determine whether the user has authority to request performance of the preset function by using the personal information of the user, and may perform the preset function.

In an embodiment, the user authentication request device 20 may transmit the personal information of the user to an external server, and the server storing the authority information for each piece of personal information of the user may transmit the authority information for the personal information of the user to the user authentication request device 20. The user authentication request device 20 may perform the preset function, based on the authority information.

In an embodiment, the user authentication request device 20 may perform payment, which is the preset function, through communication with a payment server capable of performing payment, based on the personal information of the user.

In another embodiment, in operation 962, the user authentication device 10 may perform the preset function, based on the first authentication result value and the personal information.

In an embodiment, the user authentication request device 20 may transmit the first authentication result value to the user authentication device 10, in which the registered biometric data matching the first authentication means biometric data is stored, by using personal information associated with the registered biometric data.

In an embodiment, the user authentication device 10 may perform the preset function, based on the first authentication result value and the personal information.

In an embodiment, the user authentication device 10 may determine whether the personal information received from the user authentication request device 20 matches the personal information prestored in the user authentication device 10. Furthermore, the user authentication device 10 may perform the preset function only when the personal information received from the user authentication request device 20 matches the personal information prestored in the user authentication device 10.

In an embodiment, the user authentication device 10 may transmit the personal information of the user to an external server, and the server storing the authority information for each piece of personal information of the user may transmit the authority information for the personal information of the user to the user authentication device 10. The user authentication device 10 may perform the preset function, based on the authority information.

In an embodiment, the user authentication device 10 may perform payment, which is the preset function, through communication with a payment server capable of performing payment, based on the personal information of the user.

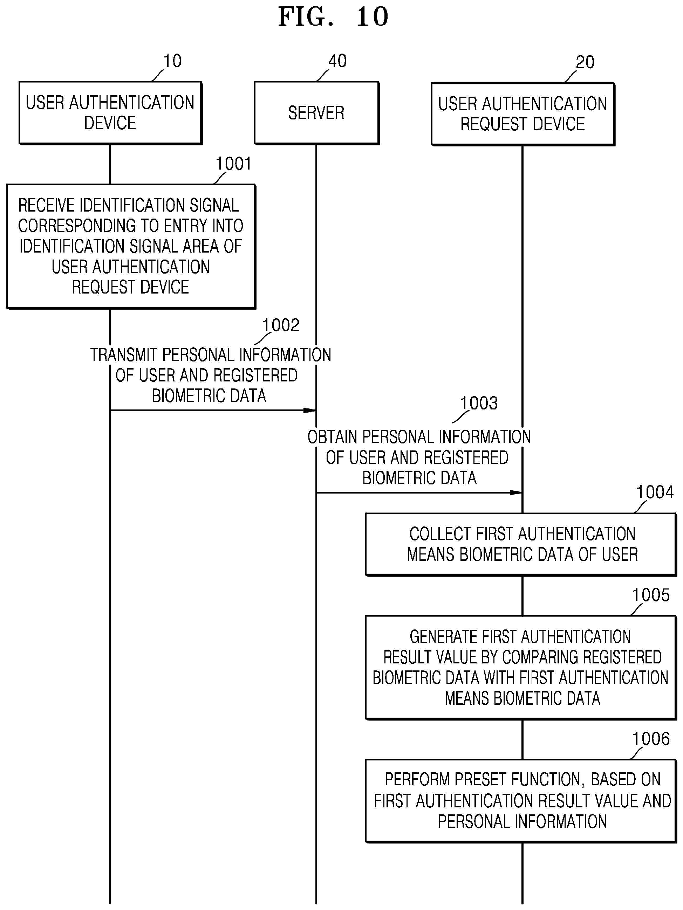

FIG. 10 is a flowchart of a method, performed by a user authentication device, of transmitting personal information and registered biometric data to a user authentication request device, according to an embodiment.

Descriptions of parts of the embodiments described with reference to FIG. 9, which may be equally applied to or analogously applied to the embodiment illustrated in FIG. 10, are omitted.

In an embodiment, in operation 1001, a user authentication device 10 may receive an identification signal corresponding to entry into an identification signal area of a user authentication request device 20.

In an embodiment, in operation 1002, the user authentication device 10 may transmit personal information of a user and registered biometric data to a server 40.

Specifically, the server 40 may store real-time information of each of a plurality of user authentication request devices 20 capable of performing user authentication. For example, the server 40 may assign unique numbers K01 to K10 to the respective user authentication request devices 20 and may store real-time information of the respective user authentication request devices 20. The server 40 may correspond to an RTDB server 40 capable of immediately reflecting real-time information. The server 40 may store, in real-time information of K01 of the server 40, the personal information of the user and the registered biometric data received from the user authentication device 10 having received the identification signal of the user authentication request device 20 corresponding to K01.

In an embodiment, in operation 1003, the user authentication request device 20 may obtain the personal information of the user and the registered biometric data from the server 40.

In an embodiment, the user authentication request device 20 may monitor the real-time information input to the server 40, which is the RTDB server. In an embodiment, the user authentication request device 20 monitoring the real-time information of the user authentication request device 20 corresponding to K01 through the server 40 may retrieve and obtain the personal information and the registered biometric data of the user authentication device 10 stored in the real-time information.

In an embodiment, in operation 1004, the user authentication request device 20 may collect first authentication means biometric data of the user.

In an embodiment, in operation 1005, the user authentication request device 20 may generate a first authentication result value by comparing the registered biometric data with the first authentication means biometric data.

In an embodiment, in operation 1006, the user authentication request device 20 may perform a preset function, based on the first authentication result value and the personal information.

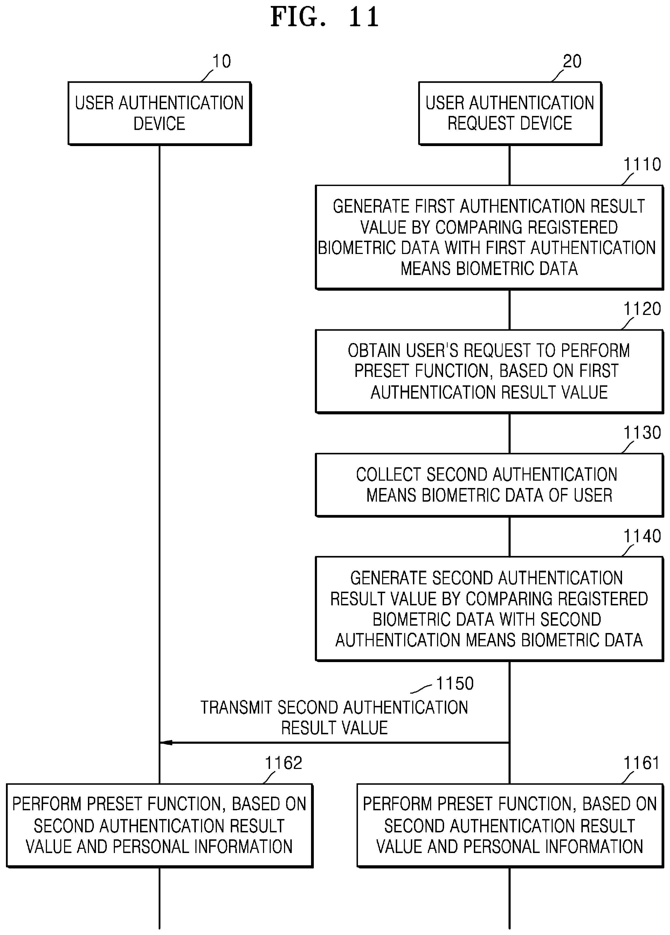

FIG. 11 is a flowchart of a method of, upon obtaining a user's request to perform a preset function, re-performing user authentication through a user authentication request device authentication method, according to an embodiment.

Descriptions of parts of the embodiments described with reference to FIGS. 9 and 10, which may be equally applied to or analogously applied to the embodiment illustrated in FIG. 11, are omitted.

In an embodiment, in operation 1110, the user authentication request device 20 may generate a first authentication result value by comparing the registered biometric data with the first authentication means biometric data.

In an embodiment, in operation 1120, the user authentication request device 20 may obtain a user's request to perform a preset function, based on the first authentication result value.

In an embodiment, when the first authentication result value is a value indicating that the first authentication means biometric data matches the registered biometric data, the user authentication request device 20 may obtain, from the user located in front of the user authentication request device 20, the request to perform the preset function.

In an embodiment, the user authentication request device 20 may generate an interface for displaying preferred menu information among pieces of personal information corresponding to the first authentication means biometric data and may provide the generated interface to the user. Furthermore, when the first authentication result value is a value indicating that the first authentication means biometric data matches the registered biometric data, the user authentication request device 20 may obtain, from the user, a payment request for an order menu selected based on the preferred menu information as the request to perform the preset function.

In an embodiment, in operation 1130, the user authentication request device 20 may collect second authentication means biometric data of the user.

In an embodiment, the user authentication request device 20 may collect the second authentication means biometric data of the user by using an imaging sensor of the user authentication request device 20 at the time when the request to perform the preset function is obtained.

In an embodiment, in operation 1140, the user authentication request device 20 may generate a second authentication result value by comparing the registered biometric data with the second authentication means biometric data.

In an embodiment, the user authentication request device 20 may generate the second authentication result value by determining whether the second authentication means biometric data matches the registered biometric data through a comparison between the second authentication means biometric data and the registered biometric data determined as matching the first authentication means biometric data when generating the first authentication result value.

In an embodiment, in operation 1150, the user authentication request device 20 may transmit the second authentication result value to the user authentication device 10.

In an embodiment, the user authentication request device 20 may directly transmit the second authentication result value to the user authentication device 10. In another embodiment, the user authentication request device 20 may transmit the second authentication result value to the user authentication device 10 through a proxy server.

However, when the user authentication request device 20 directly performs the preset function, the process of transmitting the second authentication result value to the user authentication device 10 may be omitted.

In an embodiment, in operation 1161, the user authentication request device 20 may perform the preset function, based on the second authentication result value and the personal information.

In another embodiment, in operation 1162, the user authentication device 10 may perform the preset function, based on the second authentication result value and the personal information.

Accordingly, the user authentication system may improve security by preventing a user different from the user corresponding to the first authentication means biometric data collected before completion of user authentication from requesting performance of the preset function after completion of user authentication.

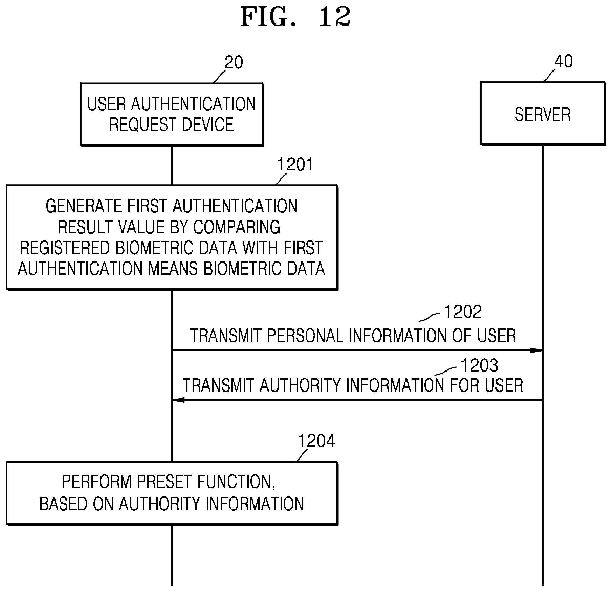

FIG. 12 is a flowchart of a method of obtaining authority information for a user from a server and performing a preset function, according to an embodiment.

Descriptions of parts of the embodiments described with reference to FIGS. 9 to 11, which may be equally applied to or analogously applied to the embodiment illustrated in FIG. 12, are omitted.

In an embodiment, in operation 1201, a user authentication request device 20 may generate a first authentication result value by comparing the registered biometric data with the first authentication means biometric data.

In an embodiment, in operation 1202, the user authentication request device 20 may transmit personal information of a user to a server 40.

In an embodiment, the user authentication request device 20 may transmit the personal information of the user to the server 40, based on determining that the first authentication result value is a value indicating that the first authentication means biometric data matches the registered biometric data.

Specifically, the user authentication request device 20 may transmit, to the server 40, personal information of a user corresponding to the personal information included in the first authentication result value among pieces of personal information of a plurality of users, which are obtained by the user authentication request device 20.

For example, the user authentication device 10 may transmit, to the server 40, only personal information necessary to obtain authority information for the user from the server 40 among various types of personal information included in the personal information of the user. Specifically, the user authentication request device 20 may transmit, to the server 40, only a customer number included in the personal information of the user.

In an embodiment, in operation 1203, the server 40 may transmit authority information for the user to the user authentication request device 20.

In an embodiment, the authority information may refer to information indicating whether the user has authority to request performance of a preset function. Specifically, the authority information may refer to information indicating whether the user has authority to access a specific place.

In an embodiment, the server 40 may store authority information corresponding to the personal information of the user. Specifically, the server 40 may store authority information for personal information of each of users registered in the user authentication system. Furthermore, the server 40 may transmit, to the user authentication request device 20, the authority information corresponding to the personal information of the user received from the user authentication request device 20.

In an embodiment, in operation 1204, the user authentication request device 20 may perform the preset function, based on the authority information.

In an embodiment, when the authority information indicates that the user has authority to request performance of the preset function, the user authentication request device 20 may perform the preset function.

Although not illustrated in FIG. 12, in another embodiment, the user authentication request device 20 may transmit the first authentication result value to the user authentication device 10. Furthermore, the user authentication device 10 may transmit the personal information of the user to the server 40, based on the first authentication result value, and accordingly obtain the authority information from the server 40. Furthermore, the user authentication device 10 may perform the preset function, based on the authority information.

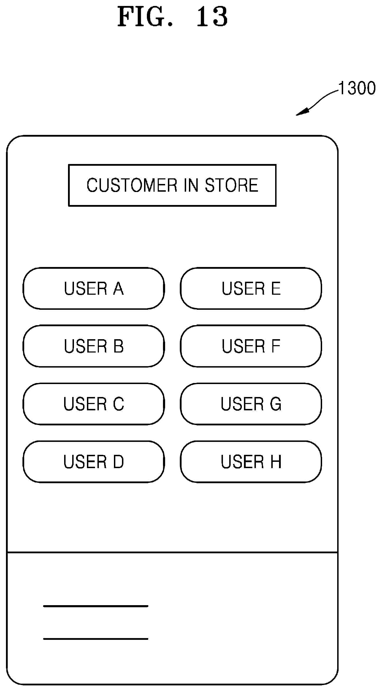

FIG. 13 is an example diagram illustrating an interface for displaying personal information of at least one user located in an identification signal area of a user authentication request device, according to an embodiment.

Referring to FIG. 13, the user authentication request device 20 may generate an interface 1300 for displaying pieces of personal information of a plurality of users respectively obtained from a plurality of user authentication devices 10 located within an identification signal area of the user authentication request device 20, and may provide the generated interface 1300 to the user.

For example, the user authentication request device 20 may broadcast an identification signal to the identification signal area, and the user authentication device 10 having received the identification signal may transmit personal information of the user, excluding biometric information of the user, to the user authentication request device 20.

Furthermore, the user authentication request device 20 may generate the interface 1300 for displaying the personal information of the user obtained from the user authentication device 10 and may provide the generated interface 1300 to the user through a display module included in the user authentication request device 20.

In an embodiment, the user authentication request device 20 may provide, through the display module to the user, personal information which is not sensitive to security, such as a name, a nickname, an ID, or a customer number, among the pieces of personal information of the plurality of users located within the identification signal area. Accordingly, a user who intends to perform user authentication through the user authentication request device 20 and receive a service according to performance of a preset function may recognize through the interface 1300 that the user is located around the user authentication request device 20.

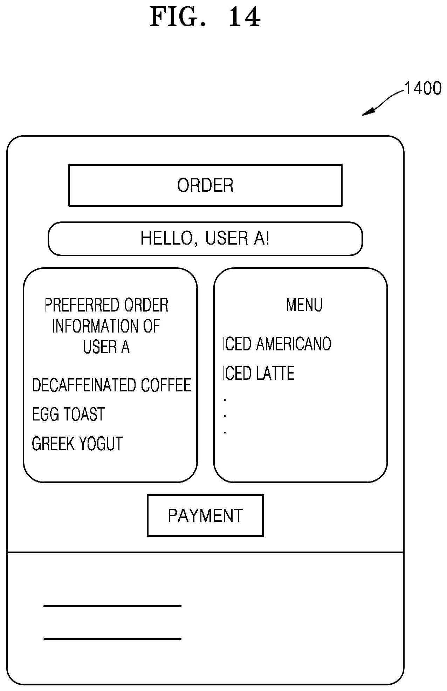

FIG. 14 is an example diagram illustrating an interface for displaying personal information of a user corresponding to authentication means biometric data collected by a user authentication request device, according to an embodiment.

Referring to FIG. 14, the user authentication request device 20 may generate an interface 1400 for displaying personal information of a user corresponding to first authentication means biometric data collected by the user authentication request device 20, and may provide the generated interface 1400 to the user. Specifically, the user authentication request device 20 may generate the interface 1400 for displaying personal information of a user corresponding to the first authentication means biometric data among pieces of personal information of a plurality of users received according to entry of user authentication devices 10 of the plurality of users into an identification signal area, and may provide the interface 1400 to the user through a display module.

In an embodiment, the user authentication request device 20 may receive registered biometric data and personal information from the user authentication device 10 of the user entering the identification signal area of the user authentication request device 20 through the user authentication method described above with reference to FIG. 9. Furthermore, the user authentication request device 20 may determine registered biometric data matching the collected first authentication means biometric data among the plurality of pieces of registered biometric data received from the plurality of user authentication devices 10, and may generate the interface 1400 for displaying personal information of the user received together with the registered biometric data matching the first authentication means biometric data.

In another embodiment, the user authentication request device 20 may receive personal information from the user authentication device 10 of the user entering the identification signal area of the user authentication request device 20 through the user authentication method described above with reference to FIG. 3. Furthermore, the user authentication request device 20 may additionally obtain personal information, such as a telephone number and a name, from the user together with collection of the first authentication means biometric data, and may generate the interface 1400 for displaying personal information corresponding to the obtained personal information among the pieces of personal information received from the plurality of user authentication devices 10.

In an embodiment, the user authentication request device 20 may generate the interface 1400 for displaying preferred menu information or preferred visit information among the pieces of personal information of the user corresponding to the first authentication means biometric data, thereby improving convenience in selecting a menu or a place to visit.

Specifically, a user visiting a store may easily and quickly select a menu through preferred menu information including frequently ordered menu information displayed on the user authentication request device 20 and may request payment, which is a preset function. Furthermore, a user visiting a hospital may easily and quickly select a medical department through preferred visit information including location information of a frequently visited medical department displayed on the user authentication request device 20 and may request medical waiting, which is a preset function.

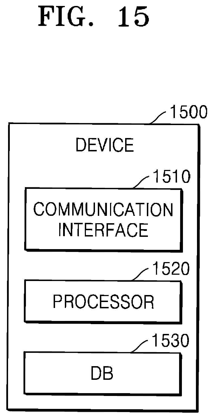

FIG. 15 is a block diagram of a device 1500 according to an embodiment.

The device 1500 illustrated in FIG. 15 may be at least one of the user authentication device 10, the user authentication request device 20, or the server 40, which has been described above.

Referring to FIG. 15, the device 1500 may include a communication interface 1510, a processor 1520, and a DB 1530. Only components related to the embodiment are illustrated in the device 1500 of FIG. 15. Therefore, it will be understood by those of ordinary skill in the art that, in addition to the components illustrated in FIG. 15, other general-purpose components may be further included.

The communication interface 1510 may include one or more components which enable wired/wireless communication with an external server or an external device. For example, the communication interface 1510 may include at least one of a short-range communication interface (not shown), a mobile communication interface (not shown), and a broadcasting reception interface (not shown).

The DB 1530 is hardware which stores various data processed within the device 1500, and may store a program for processing and control by the processor 1520. The DB 1530 may store payment information, user information, or the like.

The DB 1530 may include random access memory (RAM), such as dynamic RAM (DRAM) or static RAM (SRAM), read-only memory (ROM), electrically erasable programmable ROM (EEPROM), compact-disc ROM (CD-ROM), Blu-ray or other optical disk storage, hard disk drive (HDD), solid state drive (SSD), or flash memory.

The processor 1520 may control the overall operations of the device 1500. For example, the processor 1520 may execute programs stored in the DB 1530 to perform overall control on an input interface (not shown), a display (not shown), the communication interface 1510, the DB 1530, or the like. The processor 1520 may execute the programs stored in the DB 1530 to control the operation of the device 1500.

The processor 1520 may control at least some of the operations of the device 1500 described above.

The processor 1520 may be implemented by using at least one of application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electrical units for performing functions.

In an embodiment, the device 1500 may be a mobile electronic device. For example, the device 1500 may be implemented as a smartphone, a tablet PC, a PC, a smart television (TV), a PDA, a laptop, a media player, a navigation system, a device on which a camera is mounted, and other mobile electronic devices. Furthermore, the device 1500 may be implemented as a wearable device, such as a watch, glasses, a hair band, or a ring, which has a communication function and a data processing function.

The disclosure may provide a user authentication system capable of improving user convenience while maintaining a high level of security.

Furthermore, in the disclosure, when a user authentication device of a user enters an identification signal area of a user authentication request device, personal information capable of identifying the user is transmitted in advance to the user authentication request device before user authentication is performed. Accordingly, a preset subsequent procedure may be performed quickly and accurately by using the personal information of the user after user authentication.

Effects to be achieved by the embodiments are not limited to those described above, and other effects that are not described herein will be clearly understood from the description of the disclosure by those of ordinary skill in the art.

Embodiments according to the disclosure may be implemented in the form of a computer program which may be executed through various components on a computer, and such a computer program may be recorded on a computer-readable medium. At this time, the medium may include a magnetic medium, such as hard disk, floppy disk, and magnetic tape, an optical recording medium, such as CD-ROM and digital versatile disc (DVD), a magneto-optical medium, such as floptical disk, and hardware devices specially configured to store and execute program instructions, such as ROM, RAM, or flash memory.

On the other hand, the computer program may be specially designed and configured for the disclosure, or may be known and available to those of ordinary skill in the art of computer software. Examples of the computer program may include not only machine language code generated by a compiler but also high-level language code which is executable using an interpreter or the like by a computer.

According to an embodiment, the methods according to various embodiments of the disclosure may be provided as a part of a computer program product. The computer program product may be traded as a commercial product between a seller and a buyer. The computer program product may be distributed in the form of a machine-readable storage medium (for example, CD-ROM), or may be distributed (for example, downloaded or uploaded) online, either via an application store (for example, Play Store^{™}) or directly between two user devices. In the case of the online distribution, at least part of the computer program product may be stored at least temporarily on a machine-readable storage medium, such as a server of a manufacturer, a server of an application store, or a memory of a relay server, or may be temporarily generated.

Operations constituting methods according to the disclosure may be performed in any suitable order unless otherwise indicated herein or otherwise clearly contradicted by context. The disclosure is not necessarily limited by the order of operations. The use of any and all examples or exemplary terms (e.g., "such as") provided herein is simply intended to describe the disclosure in detail, and the scope of the disclosure is not limited by the examples or exemplary terms unless otherwise claimed. In addition, it will be understood by those of ordinary skill in the art that various modifications, combinations and changes may be made according to design conditions and factors within the scope of the appended claims or equivalents thereof.

Therefore, it will be understood that the spirit of the disclosure should not be limited to the embodiments described above, and the claims and all equivalent modifications fall within the scope of the disclosure.

## Claims

1. A user authentication method performed by a user authentication device, the user authentication method comprising:
receiving an identification signal according to entry of the user authentication device of a user into an identification signal area set for a user authentication request device;
transmitting personal information prestored in the user authentication device to the user authentication request device, based on receiving the identification signal; obtaining first authentication means biometric data collected by the user authentication request device;
generating a first authentication result value by comparing the first authentication means biometric data with prestored registered biometric data; and
performing a preset function, based on the first authentication result value and the personal information.

2. The user authentication method of claim 1, wherein the transmitting of the personal information comprises:
determining whether identification information included in the identification signal matches prestored reference information by comparing the identification information with the prestored reference information; and
transmitting the personal information to the user authentication request device, based on determining that the identification information matches the prestored reference information.

3. The user authentication method of claim 1, wherein the personal information comprises at least one of a user's name, nickname, identifier (ID), telephone number, address, customer information, preferred order information, or preferred visit information, excluding biometric data of the user.

4. The user authentication method of claim 1, wherein the transmitting of the personal information comprises:
calculating a distance between the user authentication device and the user authentication request device, based on receiving the identification signal; and
transmitting the personal information to the user authentication request device by comparing the calculated distance with a predefined reference distance.

5. The user authentication method of claim 1, wherein the obtaining of the first authentication means biometric data comprises obtaining the first authentication means biometric data through a server which has obtained the first authentication means biometric data from the user authentication request device.

6. The user authentication method of claim 1, wherein the obtaining of the first authentication means biometric data comprises:
monitoring real-time information of the user authentication request device through a server; and
obtaining the first authentication means biometric data from the server, based on the first authentication means biometric data collected by the user authentication request device being stored in the server.

7. The user authentication method of claim 1, wherein the performing of the preset function comprises:
obtaining second authentication means biometric data from the user authentication request device, based on receiving, from the user, a request to perform the preset function;
generating a second authentication result value by comparing the second authentication means biometric data with the prestored registered biometric data; and
performing the preset function, based on the second authentication result value.

8. The user authentication method of claim 7, wherein the second authentication means biometric data comprises biometric data sensed by the user authentication request device at a time when the request to perform the preset function is received from the user.

9. The user authentication method of claim 1, wherein the performing of the preset function comprises:
transmitting the personal information of the user to a server, based on the first authentication result value;
receiving, from the server, authority information indicating whether the user has authority to request performance of the preset function; and
performing the preset function, based on the authority information.

10. The user authentication method of claim 1, wherein personal information of each of at least one user located within the identification signal area is displayed by the user authentication request device.

11. The user authentication method of claim 1, wherein personal information of the user corresponding to the first authentication means biometric data is displayed based on collecting the first authentication means biometric data by the user authentication request device.

12. The user authentication method of claim 1, wherein the user authentication request device is configured to:
transmit the personal information of the user to a server, based on obtaining the first authentication result value from the user authentication device;
receive, from the server, authority information indicating whether the user has authority to request performance of the preset function; and
perform the preset function, based on the authority information.

13. The user authentication method of claim 1, wherein the user authentication request device is configured to:
receive, from the user authentication device, a signal including a request for performing the preset function; and
perform the preset function, based on receiving the signal.

14. A user authentication device comprising:
a memory storing at least one program; and
at least one processor configured to be operated by executing the at least one program,
wherein the at least one processor is further configured to:
receive an identification signal according to entry of the user authentication device into an identification signal area set for a user authentication request device;
transmit personal information prestored in the user authentication device to the user authentication request device, based on receiving the identification signal;
obtain first authentication means biometric data collected by the user authentication request device;
generate a first authentication result value by comparing the first authentication means biometric data with prestored registered biometric data; and
perform a preset function, based on the first authentication result value and the personal information.

15. A user authentication system comprising:
a user authentication device configured to receive an identification signal according to entry of the user authentication device into an identification signal area set for a user authentication request device, transmit personal information prestored in the user authentication device to the user authentication request device, based on receiving the identification signal, obtain first authentication means biometric data collected by the user authentication request device, generate a first authentication result value by comparing the first authentication means biometric data with prestored registered biometric data, and
perform a preset function, based on the first authentication result value and the personal information; and
a user authentication request device configured to broadcast the identification signal to the identification signal area, receive the personal information of the user from the user authentication device having received the identification signal, collect and transmit the first authentication means biometric data of the user, based on receiving the personal information of the user, obtain the first authentication result value from the user authentication device, and perform a preset function, based on the first authentication result value and the personal information.
